# EUROPÄISCHE PATENTSCHRIFT

(11) **EP 2 591 656 B1**
(45) Veröffentlichungstag und Bekanntmachung des Hinweises auf die Patenterteilung: **28.12.2016**
(21) Anmeldenummer: 12401219.6
(22) Anmeldetag: 05.11.2012
(51) Int. Cl.: A01C 7/08

(54) **Nachfüllsystem**
Refilling system
Système de réapprovisionnement

(30) Priorität: 08.11.2011 DE 102011055124
(43) Veröffentlichungstag der Anmeldung: 15.05.2013
(73) Patentinhaber: Amazonen-Werke H. Dreyer GmbH & Co. KG, 49205 Hasbergen (DE)
(72) Erfinder: Wilken, Martin, 26123 Oldenburg (DE)

(56) Entgegenhaltungen:
- EP-A1- 2 353 357
- DE-A1- 1 811 181
- US-A- 4 060 181

## Beschreibung

Die Erfindung betrifft gemäß des Oberbegriffes des Patentanspruches 1 ein Nachfüllsystem.

Ein derartiges Nachfüllsystem ist in der deutschen Patentschrift 1 811 181 beschrieben. Mittels dieses Nachfüllsystems werden aus einem größeren Behälter einen einem Säschar zugeordneten Vorratsbehälter zu verteilende Saatkörner mittels eines Druckluftstromes zugeleitet. Somit soll immer genügend Saatgutvorrat im Vorratsbehälter und dem zugeordneten Dosierorgan vorhanden sein. Eine Regelung zur Beeinflussung der Menge der aus dem Behälter dem Vorratsbehälter zugeführte Saatkörner ist hier nicht vorgesehen.

Der Erfindung liegt die Aufgabe zu Grunde, mit einfachen Mitteln eine Beeinflussung der Menge der Saatkörner, die dem Vorratsbehälter zugeführt werden, vornehmen zu können.

Diese Aufgabe der erfindungsgemäß dadurch gelöst, dass vor dem Einmündungsbereich der Zwischenleitung ein einstellbares Ventilelement in der Nachfüllleitung angeordnet ist, dass vor dem Ventilelement eine Bypassleitung von der Nachfüllleitung zu dem luftdurchlässigen Bereich des Zusatzbehälters abzweigt, dass die Bypassleitung über den luftdurchlässigen Bereich des Bodens mit der Zwischenleitung verbunden ist.

Infolge dieser Maßnahmen kann über das einstellbare Ventilelement die Menge des dem Vorratsbehälter aus dem Zusatzbehälter zugeführte Saatgut eingestellt und geregelt werden. Hierdurch ist es möglich die dem Vorratsbehälter zugeleitete Menge an Saatgut entsprechend der ausgebrachten Saatgutmenge anzupassen. Auch kann über dieses Ventilelement die Saatgutförderung aus dem Zusatzbehälter zu dem Vorratsbehälter unterbrochen werden.

Eine vorteilhafte Anordnung des Ventilelementes wird dadurch erreicht, dass zwischen der Nachfüllleitung und der Bypassleitung ein die Bypassleitung verschließendes Ventilelement angeordnet ist.

Eine einfache Regelung der Förderung der Saatgutmenge lässt sich dadurch erreichen, dass mittels des einstellbaren Ventilelementes die Nachfüllleitung vor der Einmündung der Zwischenleitung in die Nachfüllleitung verschließbar ist.

Eine einfache Fernverstellung des Ventilelementes lässt sich dadurch erreichen, dass das Ventilelement als über ein motorisches Verstellelement schwenkbares Klappenelement ausgebildet ist.

Eine weitere Anpassung der Fördermenge der Saatgutes aus dem Zusatzbehälter in den Vorratsbehälter lässt sich dadurch erreichen, dass oberhalb des luftdurchlässigen Bodens eine Durchlassöffnung in der unteren Vorratsbehälterwand angeordnet ist, dass der Durchlassöffnung ein die Größe der Durchlassöffnung einstellendes Schieberelement zugeordnet ist.

Eine vorteilhafte Ausgestaltung des Montrealdosierystems wird dadurch erreicht, dass Materialdosiersystem als mit einer Druckdifferenz beaufschlagtes Vereinzelungsorgan, vorzugsweise Vereinzelungstrommel ausgebildet ist, dass die Nachfüllleitung in dem Druckbereich des Vorratsbehälters ausmündet.

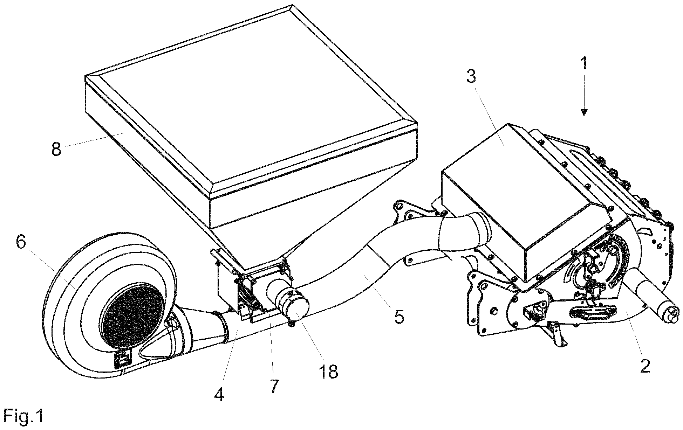

Weitere Einzelheiten der Erfindung sind der Bespielsbeschreibung zu entnehmen. Die Zeichnungen zeigen
- Fig.1: das erfindungsgemäßen Nachfüllsystems in Prinzipdarstellung und perspektivischer Darstellung,

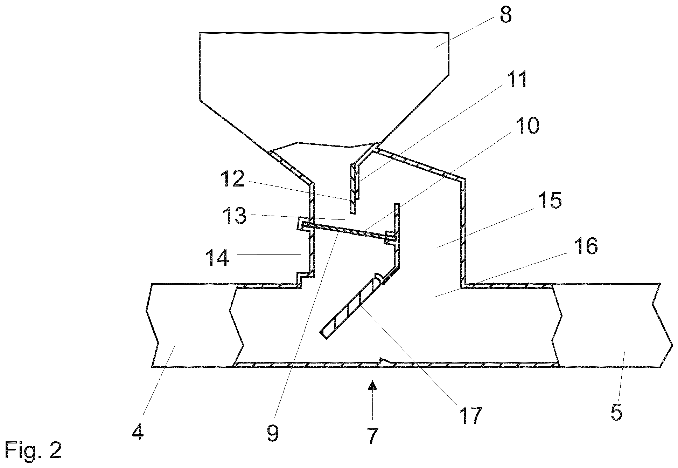

- Fig.2: das Materialzudosiersystem des Zusatzbehälters in Prinzipdarstellung, in Seitenansicht und im Teilschnitt
- Fig.3: das Materialzudosiersystem in der Darstellungsweise gemäß Fig. 2 mit voller Förderleistung,
- Fig.4: das Materialzudosiersystem in der Darstellungsweise gemäß Fig. 2 mit Teilförderleistung und
- Fig.5: das Materialzudosiersystem in der Darstellungsweise gemäß Fig. 2 mit keiner Förderleistung.

Das erfindungsgemäßen Nachfüllsystems für den Saatgutvorratsbereich einer insbesondere als Einzelkornsämaschine 1 ausgebildeten Sämaschine, die mit einem Drucksystem arbeitet, weist die in einem Vereinzelungsgehäuse 2 in bekannter Weise angeordnete Vereinzelungstrommel, welche das Materialdosiersystem bildet, einen Vorratsbehälter 3, eine pneumatisch beaufschlagte als Luftdruckleitung 4 dienende Nachfüllleitung 5 auf. Die Luftdruckleitung 4 wird von einem motorisch angetrieben Gebläse 6 mit einem Luftdrucküberdruck gegenüber dem Atmosphärendruck beaufschlagt.

Zwischen dem Gebläse 6 und dem Vorratsbehälter 3 ist ein Materialzudosiersystem 7 eines Zusatzbehälters 8 in der Luftdruckleitung 4 angeordnet. In dem Zusatzbehälter 8 befindet sich das auszubringende Saatgut. Über das Materialzudosiersystem 7 wird das sich in dem Zusatzbehälter 8 befindliche Saatgut in einstellbarer Weise in den Luftstrom der Luftdruckleitung 4 eingespeist und über die Nachfüllleitung 5 in den Vorratsbehälter 3 der Sämaschine 1 gefördert. Gleichzeitig werden über diesen Luftdruckstrom in bekannter Weise die Perforationen der Vereinzelungstrommel der Sämaschine 1 mit einer Druckdifferenz beaufschlagt. Somit können im Vereinzelungsvorgang sich die Saatkörner, wenn die Perforation durch den Saatgutvorratsbereich geführt werden, an den Perforation in bekannter Weise anlagern.

Das Materialzudosiersystem 7 des Zusatzbehälters 8 weist einen Boden 9 mit einem luftdurchlässigen Bereich 10 auf. Oberhalb des luftdurchlässigen Bereiches 10 des Bodens 9 ist in der Seitenwand 11 des Zusatzbehälters 8 eine mittels eines Schiebers 12 einstellbare Öffnung 13 angeordnet. Der luftdurchlässige Bereich 10 des Bodens 9 ist über eine Bypassleitung 14 mit der Luftdruckleitung 4 verbunden. Das Materialzudosiersystem 7 des Zusatzbehälters 8 ist über eine Zwischenleitung 15, die zwischen dem luftdurchlässigen Bereich 10 des Bodens 9 und der Nachfüllleitung 5 angeordnet ist, mit der Nachfüllleitung 5 verbunden. Vor dem Einmündungsbereich 16 der Zwischenleitung 15 in die Nachfüllleitung 5 ist ein einstellbares Ventilelement 17 angeordnet. Die vorerwähnte Bypassleitung 14 zweigt vor dem Ventilelement 17 von der Nachfüllleitung 5 zu dem luftdurchlässigen Bereich 10 des Bodens 9 ab. Somit ist die Bypassleitung 14 über den luftdurchlässigen Bereich 10 des Bodens 9 mit der Zwischenleitung 15 verbunden. Das Ventilelement 17 ist zwischen der Nachfüllleitung 5 und der Bypassleitung 14 angeordnet. Mittels des Ventilelementes 17 kann die Bypassleitung 14 verschlossen werden.

Das Ventilelement 17 ist als über ein motorisches Verstellenelement 18 verstellbares Schwenkklappenelement ausgebildet.

Wie bereits erwähnt, ist oberhalb des luftdurchlässigen Bereiches 10 des Bodens 9 eine Durchlassöffnung 13 in der unteren Vorratsbehälterwand 11 angeordnet. Mittels des zugeordneten Schieberelementes 12 ist die Größe der Durchlassöffnung 13 einstellbar.

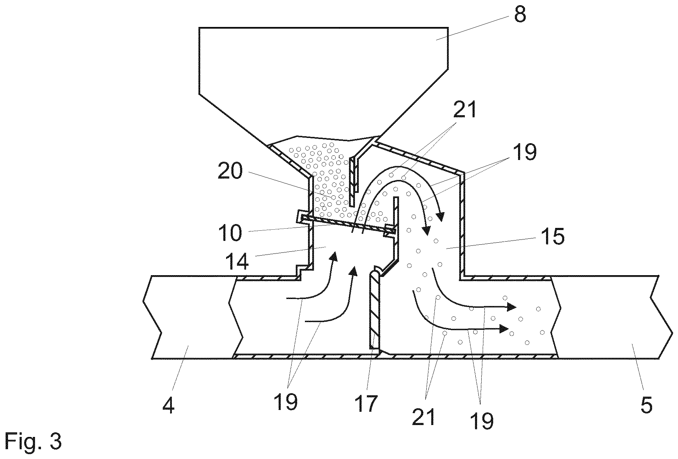

Gemäß der Einstellung des schwenkbaren Klappenelementes 17 nach Fig. 3 verschließt das Klappenelement 17 die Luftdruckleitung 4 zu dem Bereich der Nachfüllleitung 5 der Luftdruckleitung 4. Der gesamte Luftdruckstrom muss durch den luftdurchlässigen Bereich 10 des Bodens 9 über die Bypassleitung 14 in die Nachfüllleitung 5 strömen, wie durch die Pfeile 19 dargestellt ist. Hierdurch wird die größte Fördermenge von Saatgut aus dem Zusatzbehälter 8 in den Vorratsbehälter 3 erreicht. Hierbei wirbelt der durch den luftdurchlässigen Bereich 10 des Bodens 9 strömende Luftstrom 19 das Saatgut 20 auf. Es entsteht ein Fließbett. Der Luftdruckstrom 19 reißt die aufgewirbelten Saatkörner 21 mit und fördert sie über die Nachfüllleitung 5 in den Vorratsbehälter 3.

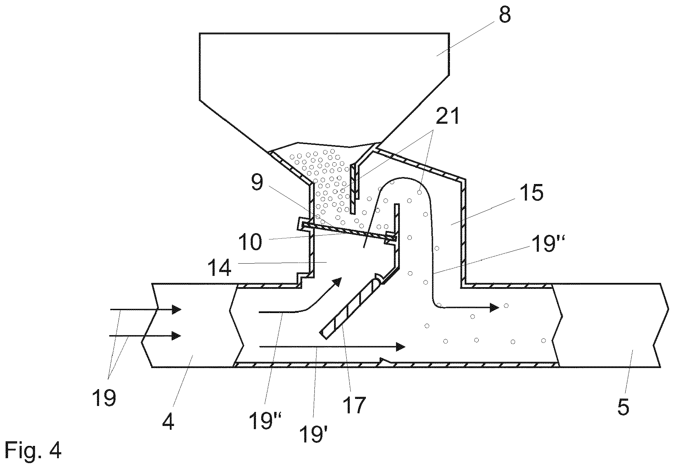

Gemäß der Einstellung des schwenkbaren Klappenelementes 17 nach Fig. 4 ist das Ventilelement in eine Mittelstellung eingestellt, so dass ein Teil 19'des Luftstromes direkt in die Nachfüllleitung 5 strömen kann, während ein anderer Teilstrom 19'durch den luftdurchlässigen Bereich 10 des Bodens 9 strömt und hier ein Fließbett der Saatkörner 21 erzeugt und eine geringere Menge Saatkörner 21 als bei der Einstellung gemäß Fig. 3 mitreißt und über die Nachfüllleitung 5 in den Vorratsbehälter 3 Sämaschine 1 fördert.

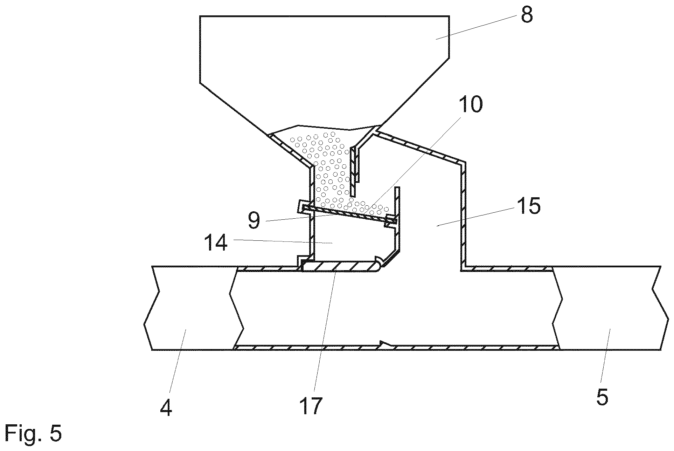

Gemäß der Einstellung des schwenkbaren Klappenelementes 17 nach Fig. 5 ist das Ventilelement so eingestellt, aber dass die Bypassleitung 14 zu dem luftdurchlässigen Bereich 10 des Bodens 9 verschlossen ist. Es findet keine Förderung des Saatgutes aus dem Zusatzbehälter 8 in den Vorratsbehälter 3 über die Nachfüllleitung 5 statt.

## Patentansprüche

1. Nachfüllsystem für eine landwirtschaftliche Verteilmaschine (1), bestehend aus einem Vorratsbehälter (3) mit einem Materialdosiersystem, einem Zusatzbehälter (8) mit einem Materialzudosiersystem (7), einer zwischen dem Zusatzbehälter (8) und dem Vorratsbehälter (3) angeordneten und über ein Gebläse (6) mit einem Druckluftstrom beaufschlagten Nachfüllleitung (5), über welche das sich in dem Zusatzbehälter (8) befindliche Material dem Vorratsbehälter (3) zugeleitet wird, wobei der Boden (9) des Zusatzbehälters (8) zumindest teilweise luftdurchlässig ausgebildet ist, wobei das Materialzudosiersystem (7) des Zusatzbehälters (8) über eine Zwischenleitung (15) die zwischen dem luftdurchlässigen Bereich (10) des Bodens (9) und der Nachfüllleitung (5) angeordnet ist, mit der Nachfüllleitung (5) verbunden ist, **dadurch gekennzeichnet, dass** zur Einstellung der Menge des dem Vorratsbehälter (3) zugeleiteten Materials vor dem Einmündungsbereich (16) der Zwischenleitung (15) ein einstellbares Ventilelement (17) in der Nachfüllleitung (5) angeordnet ist, wobei vor dem Ventilelement (17) eine Bypassleitung (14) von der Nachfüllleitung (5) zu dem luftdurchlässigen Bereich (10) des Zusatzbehälters (8) abzweigt, und die Bypassleitung (14) über den luftdurchlässigen Bereich (10) des Bodens (9) mit der Zwischenleitung (15) verbunden ist.

2. Nachfüllsystem nach Anspruch 1, **dadurch gekennzeichnet, dass** zwischen der Nachfüllleitung (5) und der Bypassleitung (14) ein die Bypassleitung (14) verschließendes Ventilelement (17) angeordnet ist.

3. Nachfüllsystem nach Anspruch 1, **dadurch gekennzeichnet, dass** mittels des einstellbaren Ventilelementes (17) die Nachfüllleitung (5) vor der Einmündung der Zwischenleitung (15) in die Nachfüllleitung (5) verschließbar ist.

4. Nachfüllsystem nach zumindest einem der vorstehenden Ansprüche, **dadurch gekennzeichnet, dass** das Ventilelement (17) als über ein motorisches Verstellelement (18) schwenkbares Klappenelement ausgebildet ist.

5. Nachfüllsystem nach zumindest einem der vorstehenden Ansprüche, **dadurch gekennzeichnet, dass** oberhalb des luftdurchlässigen Bodens (9) eine Durchlassöffnung (13) in der unteren Vorratsbehälterwand (11) angeordnet ist, dass der Durchlassöffnung (13) ein die Größe der Durchlassöffnung (13) einstellendes Schieberelement (12) zugeordnet ist.

6. Nachfüllsystem nach zumindest einem der vorstehenden Ansprüche, **dadurch gekennzeichnet, dass** Materialdosiersystem als mit einer Druckdifferenz beaufschlagtes Vereinzelungsorgan, vorzugsweise Vereinzelungstrommel ausgebildet ist, dass die Nachfüllleitung (5) in dem Druckbereich des Vorratsbehälters (3) ausmündet.

## Claims

1. Refilling system for an agricultural distributing machine (1), consisting of a storage container (3) with a material-metering system, an additional container (8) with a material-topping-up system (7), a refilling line (5) which is arranged between the additional container (8) and the storage container (3) and is subjected to a flow of compressed air via a fan (6) and via which the material located in the additional container (8) is conducted to the storage container (3), wherein the base (9) of the additional container (8) is of at least partially air-permeable design, wherein the material-topping-up system (7) of the additional container (8) is connected to the refilling line (5) via an intermediate line (15) arranged between the air-permeable region (10) of the base (9) and the refilling line (5), **characterized in that**, in order to adjust the quantity of the material conducted to the storage container (3), an adjustable valve element (17) is arranged in the refilling line (5) upstream of the discharge region (16) of the intermediate line (15), wherein, upstream of the valve element (17), a bypass line (14) branches off from the refilling line (5) to the air-permeable region (10) of the additional container (8), and the bypass line (14) is connected to the intermediate line (15) via the air-permeable region (10) of the base (9).

2. Refilling system according to Claim 1, **characterized in that** a valve element (17) closing the bypass line (14) is arranged between the refilling line (5) and the bypass line (14).

3. Refilling system according to Claim 1, **characterized in that** the refilling line (5) is closable by means of the adjustable valve element (17) upstream of the discharging of the intermediate line (15) into the refilling line (5).

4. Refilling system according to at least one of the preceding claims, **characterized in that** the valve element (17) is designed as a flap element which is pivotable via a motorized adjustment element (18).

5. Refilling system according to at least one of the preceding claims, **characterized in that**, above the air-permeable base (9), a passage opening (13) is arranged in the lower storage container wall (11), **in that** the passage opening (13) is assigned a slide element (12) adjusting the size of the passage opening (13).

6. Refilling system according to at least one of the preceding claims, **characterized in that** the material-metering system is designed as a singulating member acted upon with a pressure differential, preferably a singulating drum, **in that** the refilling line (5) opens out in the pressure region of the storage container (3).

## Revendications

1. Système de réapprovisionnement pour une machine de distribution agricole (1), se composant d'un réservoir de stockage (3) avec un système de dosage de matière, d'un réservoir supplémentaire (8) avec un système de dosage de matière (7), d'une conduite de réapprovisionnement (5) disposée entre le réservoir supplémentaire (8) et le réservoir de stockage (3) et soumise à un courant d'air comprimé au moyen d'une soufflante (6), par laquelle la matière se trouvant dans le réservoir supplémentaire (8) est envoyée au réservoir de stockage (3), dans lequel le fond (9) du réservoir supplémentaire (8) est au moins partiellement perméable à l'air, dans lequel le système de dosage de matière (7) du réservoir supplémentaire (8) est raccordé à la conduite de réapprovisionnement (5) par une conduite intermédiaire (15) qui est disposée entre la zone perméable à l'air (10) du fond (9) et la conduite de réapprovisionnement (5), **caractérisé en ce qu'**un élément de soupape réglable (17) est disposé dans la conduite de réapprovisionnement (5) avant la région de l'embouchure (16) de la conduite intermédiaire (15) pour le réglage de la quantité de matière envoyée au réservoir de stockage (3), dans lequel une conduite de dérivation (14) allant de la conduite de réapprovisionnement (5) à la zone perméable à l'air (10) du réservoir supplémentaire (8) est branchée avant l'élément de soupape (17) et la conduite de dérivation (14) est raccordée à la conduite intermédiaire (15) par la région perméable à l'air (10) du fond (9).

2. Système de réapprovisionnement selon la revendication 1, **caractérisé en ce qu'**un élément de soupape (17) fermant la conduite de dérivation (14) est disposé entre la conduite de réapprovisionnement (5) et la conduite de dérivation (14).

3. Système de réapprovisionnement selon la revendication 1, **caractérisé en ce que** la conduite de réapprovisionnement (5) peut être fermée avant l'embouchure de la conduite intermédiaire (15) dans la conduite de réapprovisionnement (5) au moyen de l'élément de soupape réglable (17).

4. Système de réapprovisionnement selon au moins une des revendications précédentes, **caractérisé en ce que** l'élément de soupape (17) est formé par un élément de clapet pouvant pivoter au moyen d'un élément de réglage motorisé (18).

5. Système de réapprovisionnement selon au moins une des revendications précédentes, **caractérisé en ce qu'**une ouverture de passage (13) est disposée dans la paroi inférieure (11) du réservoir de stockage au-dessus du fond perméable à l'air (9), et **en ce qu'**un élément de registre (12) réglant la grandeur de l'ouverture de passage (13) est associé à l'ouverture de passage (13).

6. Système de réapprovisionnement selon au moins une des revendications précédentes, **caractérisé en ce que** le système de dosage de matière est réalisé sous la forme d'un organe de séparation soumis à une différence de pression, de préférence un tambour de séparation, et **en ce que** la conduite de réapprovisionnement (5) débouche dans la région de pression du réservoir de stockage (3).
